# EUROPÄISCHE PATENTSCHRIFT

(11) **EP 2 691 655 B1**
(45) Veröffentlichungstag und Bekanntmachung des Hinweises auf die Patenterteilung: **18.05.2016**
(21) Anmeldenummer: 12710449.5
(22) Anmeldetag: 20.03.2012
(51) Int. Cl.: F04D 25/08

(54) **DIAGONALVENTILATOR**
DIAGONAL FAN
VENTILATEUR DIAGONAL

(30) Priorität: 26.03.2011 DE 102011016145
(43) Veröffentlichungstag der Anmeldung: 05.02.2014
(73) Patentinhaber: ebm-papst St. Georgen GmbH & Co. KG, 78112 St. Georgen (DE)
(72) Erfinder: MÜLLER, Martin, 72297 Seewald (DE); KARWATH, Arno, 78652 Deisslingen (DE); SCHMID, Harald, 78576 Emmingen - Liptingen (DE); MAIER, Tobias, 78628 Rottweil (DE); HOGG, Gerald, 79879 Wutach-Münchingen (DE); SCHMITZ, Michael, 78048 VS-Villingen (DE); WINTER, Björn, 79874 Breitnau (DE); STADLER, Michael, 8010 Graz (AT)
(74) Vertreter: Raible Deissler Lehmann Patentanwälte
(86) Internationale Anmeldenummer: PCT/EP2012/001217
(87) Internationale Veröffentlichungsnummer: WO 2012/130405

(56) Entgegenhaltungen:
- EP-A1- 0 569 738
- DE-A1- 2 142 288
- DE-U1-202010 013 785

## Beschreibung

Die Erfindung betrifft einen Diagonalventilator mit einem Lüftergehäuse und einem um eine Drehachse drehbaren Lüfterrad, dem zu seinem Antrieb ein Elektromotor zugeordnet ist.

Ein derartiger Diagonalventilator ist bekannt aus der DE 4 127 134 A1 der Anmelderin. Das Lüfterrad hat dort die Form eines Kegelstumpfes, auf dessen Kegelfläche die Lüfterfiügel angeordnet sind. In seinem Inneren hat es einen hohlzylindrischen Abschnitt und in diesen ist der topfförmige magnetische Rückschluss des Außenläufers eines EC-Motors eingepresst (EC = elektronisch kommutiert. Andere Ausdrücke: bürstenloser Motor; kollektorloser Motor). Der Innenstator dieses EC-Motors ist auf der Außenseite eines Lagerrohrs befestigt, in dessen Innenseite sich zwei Kugellager für die Lagerung des Außenläufers befinden.

Bei einem solchen Aufbau eines Diagonalventilators ergibt sich der Nachteil, dass der EC-Motor schlecht gekühlt wird, so dass er nur eine niedrige Leistung abgeben kann, da er bei höheren Leistungen überhitzt würde.

DE 202010013785U offenbart einen Diagonalventilator mit verbesserter kählung des EC-Motors.

Dies ist ein wesentlicher Unterschied zu einem Axialventilator, bei dem - wegen der zylindrischen Form des Lüfterrads - der EC-Motor besser durch den Luftstrom gekühlt wird, den der Lüfter erzeugt. Man kann sagen, dass ein Diagonalventilator "kühlungsfeindlich" ist, was notwendig seine Leistung reduziert.

Die EP 0 569 738 A1 zeigt einen Kühlerlüftermotor. Die Rotorwelle eines Lüfterrads ist in zwei Kugellagern aufgenommen. Ein Rotor und ein Stator sind zur Drehung des Rotors vorgesehen. Das Lüfterrad weist eine kappenartige Lüfternabe, die den vorderen Teil des Motors mit Abstand übergreift, und Lüfterflügel auf, die von der Lüfternabe radial wegstreben. Mittels eines von der Rotorwelle angetriebenen Radialgebläses wird der Luftaustausch im Motorinnenraum wesentlich intensiviert. Durch die verbesserte Kühlung lässt sich die Leistungsausbeute steigern. Die Ausblasöffnung des Radialgebläses wird von Radialbohrungen gebildet, die im Bereich des Strömungsraums in die Nabenseitenwand eingebracht sind. Die Radialbohrungen können dabei in Drehrichtung des Lüfterrades gesehen sowohl vor als auch hinter den Lüfterflügeln liegen. Da diese Radialbohrungen in der Niedrigstdruckzone an der Lüfternabe liegen, wird die Luftzirkulation durch den Motorinnenraum wesentlich verstärkt.

Es ist deshalb eine Aufgabe der Erfindung, einen neuen Diagonalventilator bereit zu stellen.

Nach der Erfindung wird diese Aufgabe gelöst durch den Gegenstand des Patentanspruchs 1. Hierbei wird also der Unterdruck in einer Unterdruckzone auf der Rückseite wenigstens eines Lüfterflügels am Kühlluft-Hilfsgebtäse wirksam und verstärkt dessen Effekt. Dabei ist besonders vorteilhaft, dass der Druck in den Unterdruckzonen hinter den Lüfterflügeln zwar nicht unbeeinflusst vom Gegendruck ist, der auf den Lüfter wirkt, dass sich aber die Richtung des Druckgefälles an den Unterdruckzonen im Arbeitsbereich des Lüfters nicht ändert, während die Größe der dortigen Druckdifferenz vom Gegendruck abhängig ist.

Auch verschiebt sich die Lage der Unterdruckzone abhängig vom Gegendruck, doch bleibt ihr Kern unabhängig vom Gegendruck bestehen, so dass es möglich ist, mit diesem Unterdruck, vermehrt um den Effekt des Kühlluft-Hilfsgebläses, einen Kühlluftstrom durch den Elektromotor zu erzeugen, der im gesamten Arbeitsbereich des Diagonalventilators seine Richtung nicht ändert und daher im gesamten Arbeitsbereich eine effektive Kühlung bewirkt.

Weitere Einzelheiten und vorteilhafte Weiterbildungen der Erfindung ergeben sich aus den in der Zeichnung dargestellten und im Folgenden beschriebenen Ausführungsbeispielen, sowie aus den Unteransprüchen. Es zeigt:
- Fig. 1: einen Diagonalventilator in Explosionsdarstellung,
- Fig. 2: den Diagonalventilator der Fig. 1 im zusammengebauten Zustand, und im Längsschnitt,
- Fig. 3: eine schematisierte Darstellung des Ventilators der Fig. 1 und 2, aber ohne die erfinderischen Wandabschnitte 50 der Fig. 1 und 2, welche dort als "Luftbremse" wirken,
- Fig. 4: eine Darstellung zur Erläuterung der Wirkungsweise der Fig. 1 bis 3 bei frei blasendem Ventilator, wobei der Druck P1 auf der Einlassseite gleich dem Druck P2 auf der Auslassseite ist,
- Fig. 5 und: 6 Darstellungen analog den Fig. 3 und 4, wobei aber der Gegendruck P2 auf der Auslassseite größer ist als der Druck P1 auf der Einlassseite,
- Fig. 7: eine schematische Darstellung des Lüfterflanschs 44, der zylindrischen Trennwand 48 und der im Bereich der Trennwand 48 befestigten Wandelemente 50, die im Lüfter eine "Luftbremse" bilden, also eine Luftbewegung verlangsamen,
- Fig. 8: eine schematisierte partielle Darstellung analog Fig. 3 eines Schnitts durch einen Diagonalventilator mit einer "Luftbremse",
- Fig. 9: eine Darstellung der (pneumatischen) Schaltung für die Lüftungselemente des Lüfters nach den Fig. 7 und 8,
- Fig. 10: Einzelheiten einer Variante des Diagonalventilators,
- Fig. 11: eine schematische Darstellung des Lüfterrads beim Lüfter nach Fig. 10,
- Fig. 12: eine Darstellung der (pneumatischen) Schaltung für die Lüftungselemente des Diagonalventilators nach den Fig. 10 und 11,
- Fig. 13: eine stark schematisierte Darstellung einer Variante zu Fig. 10, und
- Fig. 14: eine Darstellung des Lüfterrads (ohne Flügel) für den Lüfter nach Fig. 13.

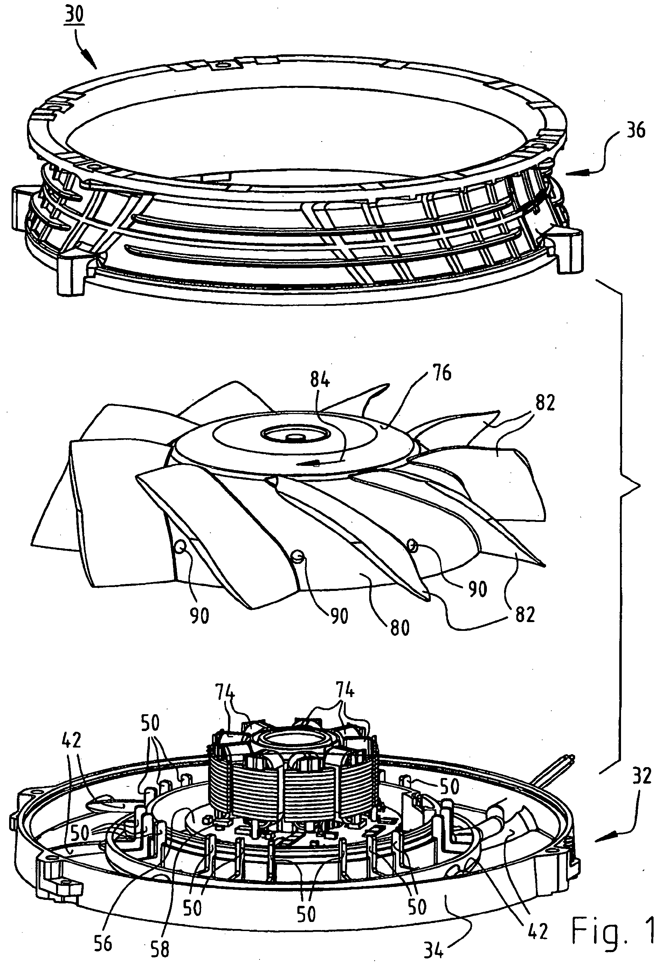

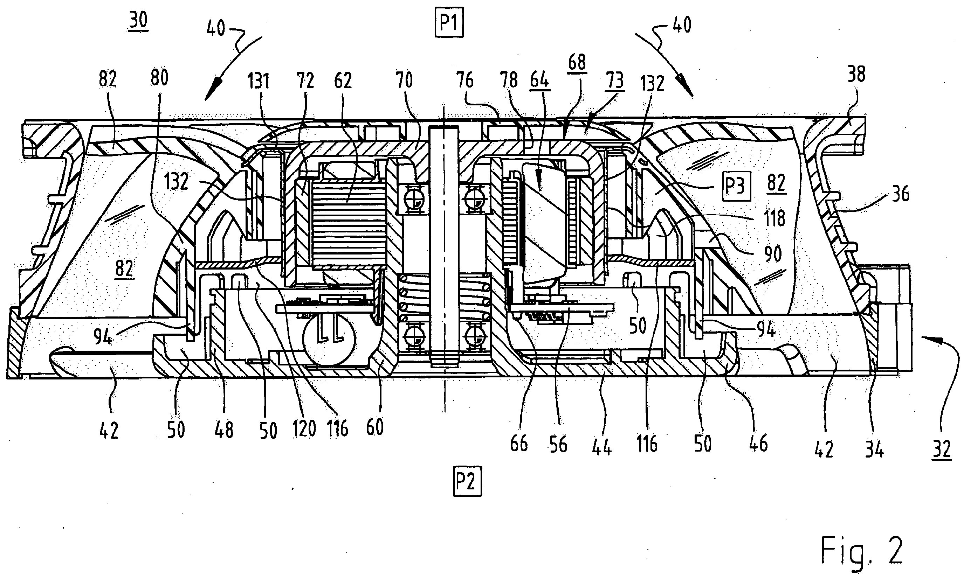

Fig. 1 zeigt unten die Basis 32 eines Diagonalventilators 30. Diese hat außen einen Ring 34, der zur Verbindung mit einem ringförmigen Lüftergehäuse 36 ausgebildet ist, das sich in Fig. 2 von unten nach oben verjüngt und am oberen Rand 38 wieder erweitert. Der Ring 34 und das Lüftergehäuse 36 sind in geeigneter Weise verbunden, z. B. durch Schrauben. Die HauptStrömungsrichtung der Luft im Lüftergehäuse 36 ist in Fig. 2 durch Pfeile 40 angedeutet.

Mit dem Ring 34 ist durch aerodynamisch gestaltete Speichen 42 ein Flansch 44 (Fig. 2) verbunden, der an seiner Peripherie einen hochgezogenen Rand 46 hat. Innerhalb des Randes 46 und mit Abstand von diesem ist am Flansch 44 eine Ringwand 48 vorgesehen. Zwischen, ihr und dem Rand 46 sind radial verlaufende Wandabschnitte 50 vorgesehen, die bevorzugt in axialer Richtung die Ringwand 48 überragen. Die Wandabschnitte 50 dienen als "Luftbremse" und haben die Funktion, die Kühlung des Diagonalventilators zu verbessern, wie nachfolgend an vereinfachten Darstellungen erläutert wird.

Innerhalb der Ringwand 48 ist eine Leiterplatte 56 angeordnet, auf der elektronische Bauteile 58 (Fig. 1) für die Kommutierung und ggf. weitere Funktionen des Ventilators 30 angeordnet sind.

Der Flansch 44 geht in seiner Mitte in ein Lagerrohr 60 über, auf dem das Blechpaket 62 eines Innenstators 64 angeordnet ist, dessen elektrische Anschlüsse 66 (Fig. 2) wie dargestellt mit der Leiterplatte 56 verbunden sind. Der Innenstator 64 ist umgeben von einem Außenrotor (auch: Außenläufer) 68. Dieser hat einen topfartigen magnetischen Rückschluss 70, in dem ein Magnetring 72 befestigt ist. Außenrotor 68 und Innenstator 64 sind Teile eines Elektromotors 73.

Der dargestellte Innenstator 64 hat mehrere ausgeprägte Pole 74, und er arbeitet zusammen mit entsprechenden Polen des Magnetrings 72.

Auf der Oberseite (Fig. 2) des Außenrotors 68 befindet sich eine sog. Luftscheibe 76. Sie ist vorzugsweise in Form eines Radialgebläses ausgebildet, welches Luft durch Löcher 78 im magnetischen Rückschluss 70 ansaugt und von dort radial nach außen transportiert. Die Luftscheibe 76 dient dazu, Luft durch den Innenstator 64 zu saugen und diesen dadurch zu kühlen. Man kann die Luftscheibe 76 deshalb korrekt auch als Kühlluft-Hilfsgebläse bezeichnen. Die Luftscheibe 76 besteht meistens aus Kunststoff und wird in geeigneter Weise am Rückschluss 70 befestigt, z. B. durch Ultraschall-Schweißen, Kleben oder dgl.

Der magnetische Rückschluss 70 wird umgeben von einem Lauf-oder Lüfterrad 80. Auf diesem sind bei dieser Variante neun Lüfterflügel 82 vorgesehen. Diese sind hier gekrümmt und gewunden. Die Drehrichtung ist bei 84 angegeben, also von oben gesehen im Uhrzeigersinn.

Wie besonders Fig. 2 zeigt, ist das Lüfterrad 80 im radialen Abstand vom Motor 64, 70 angeordnet, so dass der Elektromotor 73 praktisch gegen Wärme isoliert ist und sehr schlecht gekühlt wird. Durch das Kühlluft-Hilfsgebläse 76 ergibt sich eine gewisse Verbesserung, aber nicht im gesamten Arbeitsbereich des Ventilators 30.

Eine weitere Verbesserung ergibt sich dadurch, dass im Lüfterrad 80 jeweils im Bereich der Rückseite der Lüfterflügel 82 Löcher 90 vorgesehen sind. Diese befinden sich jeweils im Bereich einer Unterdruckzone 110, die sich hinter den Lüfterflügeln 82 bei deren Drehung bildet, so dass durch die Löcher 90 Luft durch das Lüfterrad 80 nach außen gesaugt wird, was die Kühlung des Stators 64 weiter verbessert. Dabei erweist es sich als besonders vorteilhaft, dass sich die Richtung der Luftströmung durch die Löcher 90 im Betrieb nicht ändert, auch wenn, abhängig von diversen Betriebsbedingungen, die Intensität dieser Luftströmung variieren kann.

Außerdem wird durch die Wandabschnitte 50 auch die Kühlung des Motors 73 verbessert.

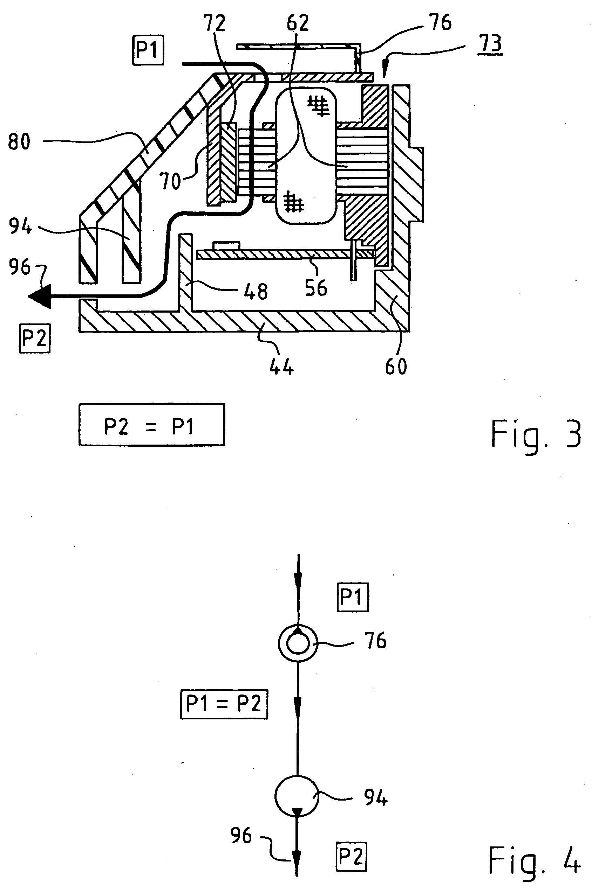

Die Fig. 3 und Fig. 4 zeigen die Verhältnisse bei einem Diagonalventilator, bei dem am Wandring 48 - anders als in Fig. 1 und 2 dargestellt - keine Wandelemente 50 vorgesehen sind, und der also kein Teil der Erfindung ist.

In diesem Fall wirkt der Wandring 94 des Lüfterrads 80 wie ein Radialventilator. Da der Wandring 94 einen deutlich höheren Durchmesser hat als der Wandring 48, wird eine Luftströmung 96 erzeugt, die deutlich stärker ist als die vom Kühlluft-Hilfsgebläse 76, so dass die Luftströmung 96 durch das Hilfsgebläse 76 entgegengesetzt zu dessen Förderrichtung gesaugt, also reversiert, wird.

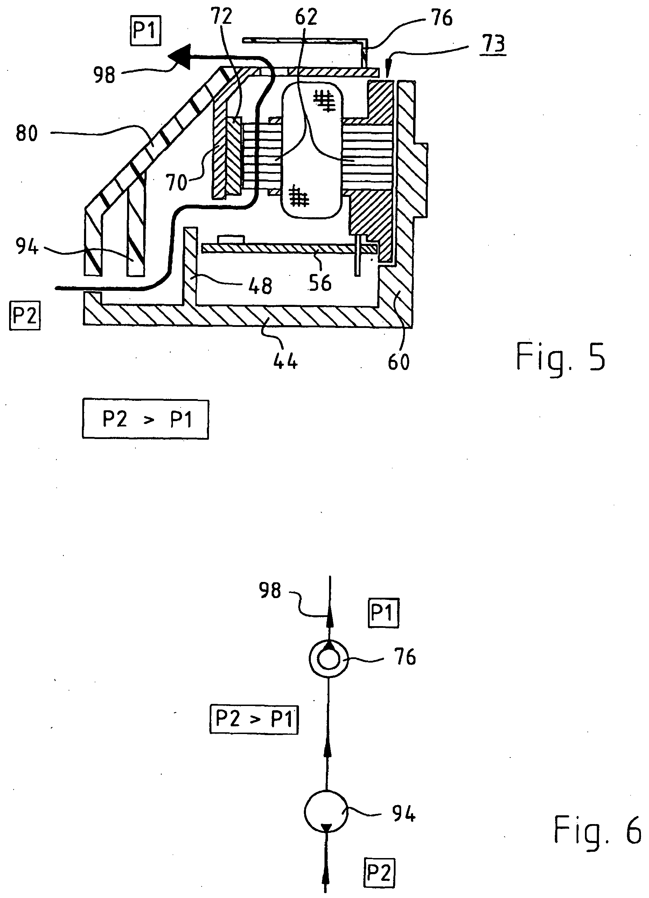

Wenn gemäß Fig. 5 und Fig. 6 der Staudruck P2 auf der Auslassseite des Lüfters 30 ansteigt, wird dieser Effekt immer mehr kompensiert, bis sich die Strömungsrichtung 98 umkehrt, vgl. Fig. 5 und 6. Der Umkehrpunkt liegt im Arbeitsbereich des Lüfters, z.B. bei etwa 350 Pa.

Im Umkehrpunkt und seiner Umgebung strömt keine Kühlluft durch den Motor 73, so dass dieser nicht gekühlt und dadurch überlastet und ggf. zerstört wird.

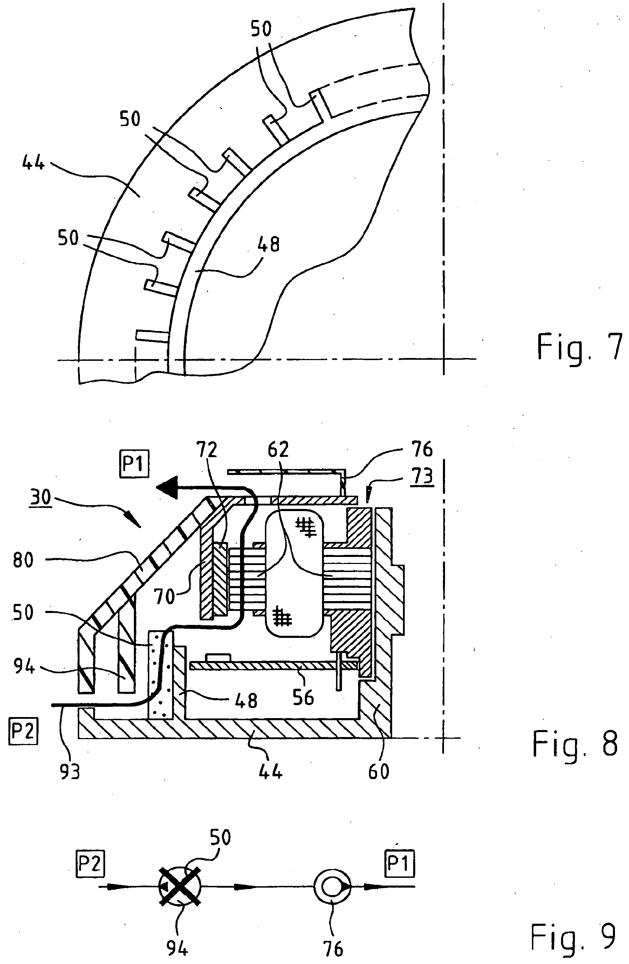

Die **Fig. 7** bis **Fig. 9** zeigen einen Diagonalventilator 30, der erfindungsgemäß an seinem Einlass mit einer Luftbremse 50 versehen ist.

Am Flansch 44 ist hier die ringförmige Wand 48 vorgesehen, welcher die ringförmige Wand 94 gegenüberliegt, die mit dem Lüfterrad 80 verbunden ist und sich mit diesem dreht. Diese beiden Teile 48, 94 sind Sicherheitselemente, welche verhindern, dass Fremdkörper in das Innere des Ventilators 30 eindringen, oder dass jemand z.B. einen Schraubenzieher in das Innere des Lüfters steckt und dort Schaden anrichtet.

Dort, wo kein solcher Schutz gefordert wird, können die Wandelemente 48, 94 ggf. entfallen oder kleiner ausgebildet werden, nämlich nach den Festigkeitsanforderungen des betreffenden Lüfterrads oder sonstigen Teils.

Die äußere Ringwand 94 wirkt im Betrieb wie ein Radialventilator, wie bereits erläutert, und durch die Wandelemente 50 wird dieser Effekt vermindert, was in Fig. 9 durch das Symbol 50 angedeutet ist.

Im Motor 73 nach den Fig. 7 bis 9 wirken also praktisch nur das Hilfsgebläse 76 oder die Löcher 90 (Fig. 2) im Lüfterrad 80, so dass die Luftströmung 93 etwa die Form hat, wie sie in Fig. 8 dargestellt ist.

Auch hier tritt aber die bei der Fig. 3 bis 6 beschriebene Umkehr der Strömungsrichtung der Kühlluft auf, wenn sich der Druck P2 ändert. Nach den Messungen der Anmelderin ist das bei Drücken zwischen 50 und 170 Pa der Fall, während bei den Fig. 3 bis 6 der Umkehrpunkt grob bei etwa 350 Pa liegt.

Eine Umkehr der Strömungsrichtung bedeutet aber, dass im Umkehrpunkt keine Kühlluft durch den Elektromotor 73 strömt, so dass dieser nicht gekühlt wird und schnell überhitzt, d.h. solche Lösungen setzen voraus, dass der Lüfter mit einer niedrigen Maximalleistung betrieben wird.

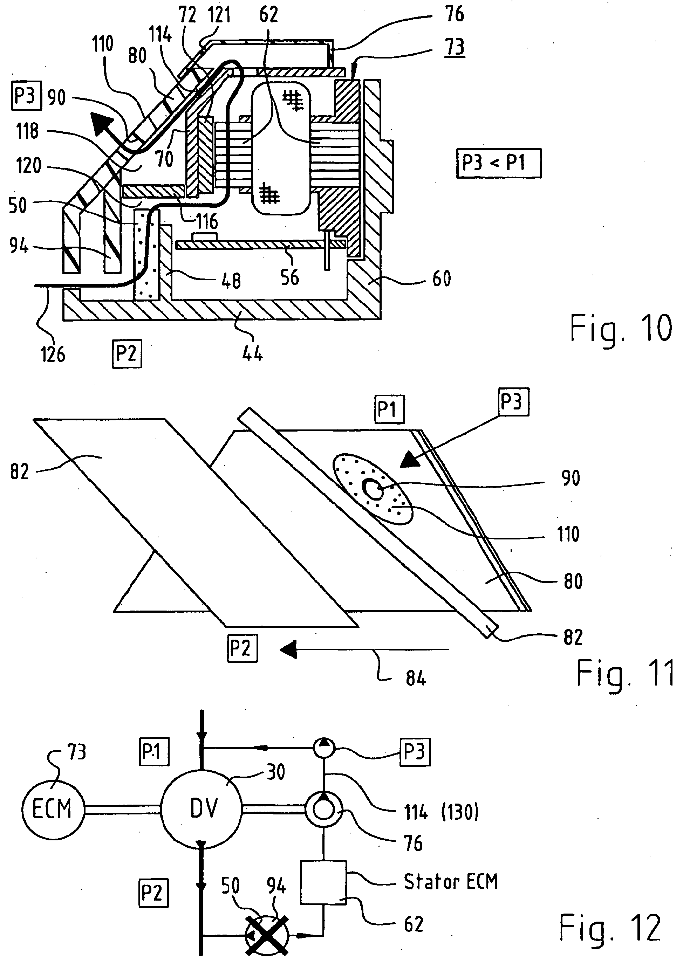

Die Fig. 10 bis Fig. 12 zeigen eine bevorzugte Ausführungsform. Diese beruht auf dem Effekt, dass auf der Rückseite eines Lüfterflügels 82 im Betrieb eine Unterdruckzone 110 auftritt, die in Fig. 11 nur für einen der Flügel 82 schematisch dargestellt ist, um die Zeichnung übersichtlich zu halten.

Die Unterdruckzone 110 wird dadurch erzeugt, dass sich der betreffende Lüfterflügel 82 durch eine Luftzone bewegt, in welcher der Druck nur wenig schwankt, so dass auch der Unterdruck P3 in der Unterdruckzone 110 nur wenig schwankt und vor allem kontinuierlich unterhalb des Druckes P1 auf der Saugseite des Lüfters 30 liegt, wobei sich jedoch die Größe der Druckdifferenz abhängig von den Betriebsbedingungen ändern kann. Auch ändert sich die Form der Unterdruckzone abhängig von Drehzahl, Gegendruck P2 etc. im Betrieb, jedoch in relativ engen Grenzen, so dass man z.B. in der Kernzone eine Bohrung 90 niederbringen kann, um diesen Unterdruck P3 anzuzapfen, vgl. Fig. 11.

Bei Fig. 12 ist der Auslass des Kühlluft-Hilfsgebläses 76 über einen Kanal 114 im Inneren des Lüfterrads 80 mit einer oder mehreren solchen Bohrungen 90 verbunden. Zu diesem Zweck ist der Raum zwischen dem magnetischen Rückschluss 70 und der Ringwand 94 durch eine Ringscheibe 116 abgedichtet die auch in Fig. 2 dargestellt ist. Diese Ringscheibe 116 teilt also das Innere des Lüfterrads 80 in einen oberen Raum 118, in dem der Unterdruck P3 herrscht, und einen unteren Raum 120, in dem der Staudruck P2 herrscht. Die Druckdifferenz zwischen diesen beiden Räumen bewirkt die Kühlluftströmung durch den Stator 62 des Elektromotors 73. Der äußere Rand 121 des Gehäuses für das Hilfsgebläse 76 liegt hier dichtend gegen das Lüfterrad 80 an, um den Raum 118 gegen den Druck P1 abzudichten.

Damit ergibt sich die schematische Darstellung nach Fig.12. Das Radialgebläse 94 wird durch die Wandelemente (Lamellen) 50 weitgehend unwirksam gemacht, wie bereits beschrieben.

Die Kühlluft 126 (Fig. 10) durchströmt dann den Stator 62 des ECM 73 und gelangt zum Hilfsgebläse 76, das, ebenso wie der Diagonalventilator 30, vom ECM 73 angetrieben wird.

Vom Auslass des Hilfsgebläses 76 gelangt die Kühlluft 126 über den Kanal 114 zur Bohrung 90 und wird über diese nach außen abgesaugt und mit dem Luftstrom des Diagonalventilators 30 abgeführt.

Vorteilhaft ist hier besonders, dass im Betrieb keine Umkehr der Strömungsrichtung der Kühlluft stattfindet, weil in den Bohrungen 90 im Betrieb die Luft ständig nach außen abgesaugt wird.

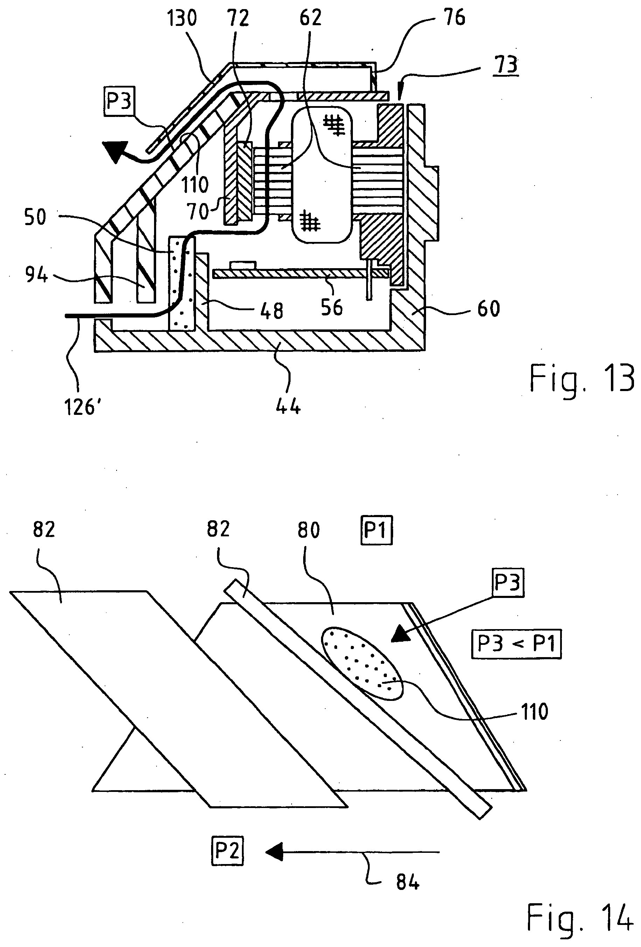

Die Fig. 13-und Fig. 14 zeigen eine Variante zu den Fig. 10 bis 12. Ebenso wie bei Fig. 11 tritt im Betrieb auf der Rückseite der Flügel 82 eine Unterdruckzone 110 auf, die aus Gründen der Übersichtlichkeit nur für einen der Flügel 82 dargestellt ist. In der Zone 110 tritt ein Unterdruck P3 auf, der ständig kleiner ist als der Druck P1 auf der Einlassseite des Lüfters 30, wie das bei Fig. 10 und 11 ausführlich beschrieben wurde. Jedoch sind im Gegensatz zu Fig. 1, 2, 10 und 11 keine Bohrungen 90 vorgesehen.

Vielmehr sind gemäß Fig. 13 anschließend an den Auslass des Kühlluft-Hilfsgebläses 76 Saugrüssel 130 vorgesehen, welche diesen Auslass mit den Unterdruckzonen 110 verbinden. Z.B. kann das Lüfterrad 80 der Fig. 1 neun Flügel 82 haben, und folglich würde der Auslass des Kühlluft-Hilfsgebläses 76 über neun Saugrüssel 130 bevorzugt mit allen neun Unterdruckzonen 110 verbunden, damit am Auslass des Hilfsgebläses 76 der Druck P3 der Unterdruckzonen 110 herrscht, der niedriger ist als der Druck P1 am Einlass.

Da die Druckdifferenz zwischen den Drücken P1 und P3 im Betrieb ständig vorhanden ist, arbeitet also das Hilfsgebläse 76 ständig mit einem niedrigeren Druck an seinem Auslass, wie das in Fig. 12 dargestellt ist, wobei in Fig. 12 statt der internen Verbindung 114 der Fig. 10 die Saugrüssel 130 der Fig. 13 wirksam sind.

Die Version nach den Fig. 10 bis 12 ist im Aufbau einfacher, da bei den Fig. 13 und 14 die Abdichtung der Saugrüssel 130 entsprechende Maßnahmen erfordert.

Im Lüfterrad 80 ist ein Flansch 131 einer so genannten Ronde 132 befestigt. Diese Ronde hat z.B. die Form eines zylindrischen Rohres, gewöhnlich aus Stahlblech, und der Flansch 131 dieser Ronde ragt etwa radial nach außen.

In die Innenseite dieser Ronde 132 ist der magnetische Rückschluss 70 des Rotors 68 eingepresst. Dadurch wird das Drehmoment vom Rotor 68 auf das Lüfterrad 80 übertragen.

Der Flansch 131 ist, wie dargestellt, bevorzugt mit Löchern versehen, damit er beim Spritzguss des Lüfterrads 80 gut in diesem verankert wird.

Fig. 1 bis Fig. 14 zeigen einen Diagonalventilator, welcher aufweist:
Ein Lüftergehäuse 36, ein um eine Drehachse drehbares Lüfterrad 80, dem zu seinem Antrieb ein Elektromotor 73 zugeordnet ist, wobei das Lüfterrad 80 sich in Richtung der Drehachse zwischen einer Lufteinlassseite und einer Luftauslassseite des Diagonalventilators 30 erstreckt, und dazu dient, bei seiner Drehung Luft in einer Haupt-Förderrichtung von der Lufteinlassseite zur Luftauslassseite zu fördern, auf der Außenseite des Lüfterrads 80 vorgesehene Lüfterflügel 82, welche, bezogen auf die Drehrichtung 84 des Lüfterrads 80 im Betrieb, eine Vorderseite und eine Rückseite aufweisen, wobei jeweils im Bereich der Rückseite eines Flügels 82 im Betrieb am Lüfterrad 80 eine Unterdruckzone 110 auftritt, ein Kühlluft-Hilfsgebläse 76, das dazu ausgelegt ist, Kühlluft auf der Innenseite des Lüfterrads 80 von der Luftauslassseite in Richtung zur Lufteinlassseite zu transportieren und durch diese Luftströmung den Elektromotor 73 des Diagonalventilators 30 zu kühlen, und mindestens eine Fluidverbindung 114; 118; 130 vom Auslass des Kühlluft-Hilfsgebläses 76 zu mindestens einer der Unterdruckzonen 110, um eine von der Luftauslassseite des Diagonalventilators 30 in Richtung zu dessen Lufteinlassseite erfolgende Strömung 126; 126' der Kühlluft für den Elektromotor 73 zu unterstützen.

Erfindungsgemäß weist das Lüfterrad 80 auf der Luftauslassseite des Diagonalventilators 30 einen ersten ringförmigen Abschnitt 94 auf, der mit einem ihm gegenüberliegenden zweiten ringförmigen Abschnitt 48 eines stationären Teils 44 des Diagonalventilators 30 zusammenwirkt, wobei an diesem zweiten Abschnitt 48 Luftleitelemente 50 vorgesehen sind, welche im Betrieb als Bremse für die Luft wirken, die von einer Drehung des ersten Abschnitts 94 mitgerissen wird.

Bevorzugt erstreckt sich die Fluidverbindung 114, 118 vom Auslass des Kühlluft-Hilfsgebläses 76 durch die Innenseite des Lüfterrads 80 und durch mindestens eine im Lüfterrad 80 vorgesehene Durchbrechung 90 zu einer Unterdruckzone 110 des Lüfterrads 80.

Bevorzugt weist das Kühlluft-Hilfsgebläse 76 ein Verbindungsorgan 130 auf, das sich über die Außenseite des Lüfterrads 80 bis zu einer am Lüfterrad im Betrieb auftretenden Unterdruckzone 110 erstreckt, damit der Druck dieser Unterdruckzone 110 am Auslass des Hilfsgebläses 76 wirksam wird. Hierbei ist bevorzugt die Innenseite des Lüfterrads 80 unterteilt in einen ersten Raum 120, in welchem im Betrieb im wesentlichen der Druck P2 am Luftauslass des Diagonalventilators herrscht, und einen zweiten Raum 118, der über mindestens eine Durchbrechung 90 des Lüfterrads 80 mit dessen Außenseite verbunden ist. Bevorzugt ist hierbei mindestens eine Durchbrechung 90 in einer Saugdruckzone 110 auf der Rückseite eines Lüfterflügels 82 angeordnet, wobei sich die Rückseite auf die Drehrichtung 84 des Lüfterrads 80 bezieht. Bevorzugt ist hierbei zwischen dem ersten Raum 120 und dem zweiten Raum 118 ein Trennglied 116 vorgesehen, welches sich zwischen der Innenseite des Lüfterrads 80 und dem Rotor 76 des Antriebs-Elektromotors 73 erstreckt. Bevorzugt ist hierbei der Elektromotor 73 als elektronisch kommutierter Außenläufermotor ausgebildet.

Bevorzugt ist das Luftführungssystem im Lüfterrad 80 gegen Leckagen abgedichtet, und die Öffnungen 90 auf der Rückseite der Lüfterflügel 82 einen größeren radialen Abstand von der Drehachse des Ventilators 30 haben als die Einlassöffnungen.

## Patentansprüche

1. Diagonalventilator, welcher aufweist:
Ein Lüftergehäuse (36);
ein um eine Drehachse drehbares Lüfterrad (80), dem zu seinem Antrieb ein Elektromotor (73) zugeordnet ist, wobei das Lüfterrad (80) sich in Richtung der Drehachse zwischen einer Lufteinlassseite und einer Luftauslassseite des Diagonalventilators (30) erstreckt, und dazu dient, bei seiner Drehung Luft in einer Haupt-Förderrichtung von der Lufteinlassseite zur Luftauslassseite zu fördern;
auf der Außenseite des Lüfterrads (80) vorgesehene Lüfterflügel (82), welche, bezogen auf die Drehrichtung (84) des Lüfterrads (80) im Betrieb, eine Vorderseite und eine Rückseite aufweisen, wobei jeweils im Bereich der Rückseite eines Flügels (82) im Betrieb am Lüfterrad (80) eine Unterdruckzone (110) auftritt;
**dadurch gekennzeichnet, dass**
ein Kühlluft-Hilfsgebläse (76) vorgesehen ist, das dazu ausgelegt ist, Kühlluft auf der Innenseite des Lüfterrads (80) von der Luftauslassseite in Richtung zur Lufteinlassseite zu transportieren und durch diese Luftströmung den Elektromotor (73) des Diagonalventilators (30) zu kühlen;
mindestens eine Fluidverbindung (114; 118; 130) vom Auslass des Kühlluft-Hilfsgebläses (76) zu mindestens einer der Unterdruckzonen (110) vorgesehen ist, um eine von der Luftauslassseite des Diagonalventilators (30) in Richtung zu dessen Lufteinlassseite erfolgende Strömung (126; 126') der Kühlluft für den Elektromotor (73) zu unterstützen, und das Lüfterrad (80) auf der Luftauslassseite des Diagonalventilators (30) einen ersten ringförmigen Abschnitt (94) aufweist, der mit einem ihm gegenüberliegenden zweiten ringförmigen Abschnitt (48) eines stationären Teils (44) des Diagonalventilators (30) zusammenwirkt, und wobei an diesem zweiten Abschnitt (48) Luftleitelemente (50) vorgesehen sind, welche im Betrieb als Bremse für die von einer Drehung der vom ersten Abschnitt (94) mitgerissene Luft wirken.

2. Diagonalventilator nach Anspruch 1, bei welchem sich die Fluidverbindung (114, 118) vom Auslass des Kühlluft-Hilfsgebläses (76) durch die Innenseite des Lüfterrads (80) und durch mindestens eine im Lüfterrad (80) vorgesehene Durchbrechung (90) zu einer Unterdruckzone (110) des Lüfterrads (80) erstreckt.

3. Diagonalventilator nach Anspruch 1 oder 2, bei welchem das Kühlluft-Hilfsgebläse (76) ein Verbindungsorgan (130) aufweist, das sich über die Außenseite des Lüfterrads (80) bis zu einer am Lüfterrad im Betrieb auftretenden Unterdruckzone (110) erstreckt, damit der Druck dieser Unterdruckzone (110) am Auslass des Hilfsgebläses (76) wirksam wird.

4. Diagonalventilator nach Anspruch 2, bei welchem die Innenseite des Lüfterrads (80) unterteilt ist in einen ersten Raum (120), in welchem im Betrieb im wesentlichen der Druck (P2) am Luftauslass des Diagonalventilators herrscht, und einen zweiten Raum (118), der über mindestens eine Durchbrechung (90) des Lüfterrads (80) mit dessen Außenseite verbunden ist.

5. Diagonalventilator nach Anspruch 4, bei welchem mindestens eine Durchbrechung (90) in einer Saugdruckzone (110) auf der Rückseite eines Lüfterfiügels (82) angeordnet ist, wobei sich die Rückseite auf die Drehrichtung (84) des Lüfterrads (80) bezieht.

6. Diagonalventilator nach Anspruch 4 oder 5, bei welchem zwischen dem ersten Raum (120) und dem zweiten Raum (118) ein Trennglied (116) vorgesehen ist, welches sich zwischen der Innenseite des Lüfterrads (80) und dem Rotor (76) des Antriebs-Elektromotors (73) erstreckt.

7. Diagonalventilator nach Anspruch 6, bei welchem der Elektromotor als elektronisch kommutierter Außenläufermotor ausgebildet ist.

8. Diagonalventilator nach einem der vorhergehenden Ansprüche, bei welchem das Luftführungssystem im Lüfterrad gegen Leckagen abgedichtet ist, und die Öffnungen (90) auf der Rückseite der Lüfterflügel (82) einen größeren Abstand von der Drehachse des Ventilators (30) haben als die Einlassöffnungen.

## Claims

1. Diagonal ventilating fan that comprises:
a fan housing (36);
a fan wheel (80) which is rotatable about a rotation axis and to which an electric motor (73) is assigned in order to drive it, the fan wheel (80) extending in the direction of the rotation axis between an air inlet side and an air outlet side of the diagonal ventilating fan (30) and serving, as the fan wheel rotates, to convey air from the air inlet side to the air outlet side in a main conveying direction;
fan blades (82) which are provided on the outside of the fan wheel (80) and which have a front side and a rear side in relation to the rotation direction (84) of the fan wheel (80) during operation, a negative-pressure zone (110) arising on the fan wheel (80) during operation in the region of the rear side of each blade (82);
**characterised in that**
an auxiliary cooling-air blower (76) is provided which is configured to transport cooling air on the inside of the fan wheel (80) from the air outlet side towards the air inlet side, and by means of said air flow, to cool the electric motor (73) of the diagonal ventilating fan (30);
at least one fluid connection (114; 118; 130) from the outlet of the auxiliary cooling-air blower (76) to at least one of the negative-pressure zones (110) is provided in order to assist a flow (126; 126') of cooling air for the electric motor (73), which flow occurs from the air outlet side of the diagonal ventilating fan (30) towards the air inlet side thereof, and the fan wheel (80) comprises, on the air outlet side of the diagonal ventilating fan (30), a first annular portion (94) that interacts with an opposite second annular portion (48) of a stationary part (44) of the diagonal ventilating fan (30), and air-directing elements (50) being provided on this second portion (48), which air-directing elements act, during operation, as a brake for the air that is entrained by a rotation of the first portion (94).

2. Diagonal ventilating fan according to claim 1, in which the fluid connection (114, 118) extends from the outlet of the auxiliary cooling-air blower (76), through the inside of the fan wheel (80) and through at least one through-opening (90) provided in the fan wheel (80), to a negative-pressure zone (110) of the fan wheel (80).

3. Diagonal ventilating fan according to either claim 1 or claim 2, in which the auxiliary cooling-air blower (76) comprises a connecting member (130) that extends over the outside of the fan wheel (80) as far as a negative-pressure zone (110) arising at the fan wheel during operation, so that the pressure of said negative-pressure zone (110) becomes effective at an outlet of the auxiliary blower (76).

4. Diagonal ventilating fan according to claim 2, in which the inside of the fan wheel (80) is divided into a first space (120) in which, during operation, substantially the pressure (P2) at the air outlet of the diagonal ventilating fan prevails, and a second space (118) that is connected to the outside of the fan wheel (80) via at least one through-opening (90) therein.

5. Diagonal ventilating fan according to claim 4, in which at least one through-opening (90) is arranged in a suction-pressure zone (110) on the rear side of a fan blade (82), the rear side being based on the rotation direction (84) of the fan wheel (80).

6. Diagonal ventilating fan according to either claim 4 or claim 5, in which a separating member (116), which extends between the inside of the fan wheel (80) and the rotor (76) of the electric drive motor (73), is provided between the first space (120) and the second space (118).

7. Diagonal ventilating fan according to claim 6, in which the electric motor is designed as an electronically commutated external-rotor motor.

8. Diagonal ventilating fan according to any of the preceding claims, in which the air guidance system in the fan wheel is sealed against leaks, and the openings (90) on the rear side of the fan blades (82) are at a greater distance from the rotation axis of the ventilating fan (30) than the inlet openings are.

## Revendications

1. Ventilateur diagonal, qui présente :
un boîtier de ventilateur (36) ;
une roue de ventilateur (80) pouvant tourner autour d'un axe de rotation, à laquelle un moteur électrique (73) est associé pour son entraînement, sachant que la roue de ventilateur (80) s'étend en direction de l'axe de rotation entre un côté d'admission d'air et un côté de sortie d'air du ventilateur diagonal (30) et sert, lors de sa rotation, à véhiculer l'air dans une direction de transport principale du côté d'admission d'air au côté de sortie d'air ;
des pales de ventilateur (82) prévues sur le côté extérieur de la roue de ventilateur (80), pales qui présentent, par rapport au sens de rotation (84) de la roue de ventilateur (80) en utilisation, un côté avant et un côté arrière, sachant qu'en utilisation, une zone de dépression respective (110) rencontre la roue de ventilateur (80) dans la région du côté arrière d'une pale (82) ;
**caractérisé en ce que**
il est prévu une soufflante auxiliaire (76) d'air de refroidissement, qui est conçue pour véhiculer de l'air de refroidissement sur le côté intérieur de la roue de ventilateur (80) depuis le côté de sortie d'air en direction du côté d'admission d'air et pour refroidir au moyen de ce flux d'air le moteur électrique (73) du ventilateur diagonal (30) ;
il est prévu au moins une liaison fluidique (114; 118; 130) depuis la sortie de la soufflante auxiliaire (76) d'air de refroidissement vers au moins une des zones de dépression (110), afin de soutenir un écoulement (126 ; 126') de l'air de refroidissement pour le moteur électrique (73) s'effectuant depuis le côté de sortie d'air du ventilateur diagonal (30) en direction de son côté d'admission d'air, et la roue de ventilateur (80) présente, sur le côté de sortie d'air du ventilateur diagonal (30), une première portion annulaire (94) qui coopère avec une deuxième portion annulaire (48) - qui lui fait face - d'une partie stationnaire (44) du ventilateur diagonal (30), et sachant que des éléments (50) de guidage d'air sont prévus sur cette deuxième portion (48), élément qui, en utilisation, jouent le rôle de frein pour l'air entraîné par une rotation de la première portion (94).

2. Ventilateur diagonal selon la revendication 1, dans lequel la liaison fluidique (114, 118) s'étend depuis la sortie de la soufflante auxiliaire (76) d'air de refroidissement vers une zone de dépression (110) de la roue de ventilateur (80) en passant par le côté intérieur de la roue de ventilateur (80) et par au moins une ouverture débouchante (90) prévue dans la roue de ventilateur (80).

3. Ventilateur diagonal selon la revendication 1 ou 2, dans lequel la soufflante auxiliaire (76) d'air de refroidissement présente un organe de liaison (130) qui s'étend sur le côté extérieur de la roue de ventilateur (80) jusqu'à une zone de dépression (110) apparaissant en utilisation au niveau de la roue de ventilateur, afin que la pression de cette zone de dépression (110) soit active ou efficace à la sortie de la soufflante auxiliaire (76).

4. Ventilateur diagonal selon la revendication 2, dans lequel le côté intérieur de la roue de ventilateur (80) est subdivisé en une première chambre (120), dans laquelle règne en utilisation sensiblement la pression (P2) à la sortie d'air du ventilateur diagonal, et une deuxième chambre (118), qui communique avec le côté extérieur de la roue de ventilateur (80) par l'intermédiaire d'au moins une ouverture débouchante (90) de celle-ci.

5. Ventilateur diagonal selon la revendication 4, dans lequel au moins une ouverture débouchante (90) est disposée dans une zone (110) de pression d'aspiration sur le côté arrière d'une pale de ventilateur (82), sachant que le côté arrière est défini par rapport au sens de rotation (84) de la roue de ventilateur (80).

6. Ventilateur diagonal selon la revendication 4 ou 5, dans lequel un organe de séparation (116) est prévu entre la première chambre (120) et la deuxième chambre (118), organe qui s'étend entre le côté intérieur de la roue de ventilateur (80) et le rotor (76) du moteur électrique (73) d'entraînement.

7. Ventilateur diagonal selon la revendication 6, dans lequel le moteur électrique est réalisé sous forme de moteur à induit extérieur à commutation électronique.

8. Ventilateur diagonal selon l'une des revendications précédentes, dans lequel le système de guidage d'air dans la roue de ventilateur est étanché contre les fuites, et les ouvertures (90) sur le côté arrière des pales de ventilateur (82) se trouvent à une plus grande distance de l'axe de rotation du ventilateur (30) que les ouvertures d'admission.
